# EUROPÄISCHE PATENTSCHRIFT

(11) **EP 3 608 088 B1**
(45) Veröffentlichungstag und Bekanntmachung des Hinweises auf die Patenterteilung: **19.10.2022**
(21) Anmeldenummer: 19186648.2
(22) Anmeldetag: 16.07.2019
(51) Int. Cl.: B29C 65/48, F03D 1/06, B29C 65/00, B29L 31/08

(54) **ROTORBLATT MIT VERKLEBUNGEN MIT KONTINUIERLICH VERÄNDERLICHEN BREITEN UND EIN HERSTELLUNGSVERFAHREN FÜR EIN ROTORBLATT**
ROTOR BLADE WITH BONDINGS WITH CONTINUOUSLY VARIABLE WIDTHS AND A METHOD OF MANUFACTURING A ROTOR BLADE
PALE DE ROTOR POURVUE DE COLLAGE À DES LARGEURS VARIABLES CONTINUES ET PROCÉDÉ DE FABRICATION DE PALE DE ROTOR

(30) Priorität: 06.08.2018 DE 102018006165
(43) Veröffentlichungstag der Anmeldung: 12.02.2020
(73) Patentinhaber: Siemens Gamesa Renewable Energy Service GmbH, 20097 Hamburg (DE)
(72) Erfinder: Bendel, Urs, 24787 Fockbek (DE)
(74) Vertreter: Groth, Wieland

(56) Entgegenhaltungen:
- DE-A1-102008 049 016
- DE-A1-102014 203 936

## Beschreibung

Die Erfindung betrifft ein Rotorblatt mit mindestens einer Verklebung zwischen zwei Bauteilen in Form eines Verklebestreifens mit einer Länge und einer Breite, der wenigstens einen Längsabschnitt aufweist. Die Erfindung betrifft auch ein Verfahren zur Herstellung eines Rotorblattes.

Herkömmliche Rotorblätter sind üblicherweise aus zwei Rotorblatthalbschalen aufgebaut, die an ihrer Vorderkante und Hinterkante miteinander verklebt sind. Üblicherweise werden die beiden Rotorblatthalbschalen separat voneinander jeweils in einer Formhalbschale hergestellt. Die beiden Formhalbschalen sind klappbar gegeneinander ausgebildet. Im Folgenden wird die Konfiguration beschrieben, dass die Formschale, die die saugseitige Schale des Rotorblattes ausbildet, fest am Boden verbleibt und die druckseitige Formschale über die saugseitige Formschale gedreht wird. Die erfindungsgemäße Ausführung der Verklebungen soll dabei auch für den Fall gelten, in dem die druckseitige Formschale fest mit dem Boden verbunden ist und die saugseitige Formschale gedreht wird.

Eine saugseitige Rotorblatthalbschale verbleibt während des Klappvorgangs am Boden, während eine druckseitige Formhalbschale üblicherweise von einer Position auf dem Boden neben der saugseitigen Formhalbschale in eine Position über die saugseitige Formhalbschale geklappt wird.

In der DE 10 2014 203 936 A1 ist ein Verfahren zum Herstellen eines Rotorblattes bekannt, wobei das Rotorblatt eine stumpfe Hinterkante aufweist und zwei Füllkörper innenseitig an die stumpfe Hinterkante angeklebt werden.

In der DE 10 2008 049 016 A1 ist ein Rotorblatt mit einem Gurt bekannt, wobei der Gurt aus verschiedenen Gelegelagen aufgebaut ist, die eine unterschiedliche Länge und Breite aufweisen.

Im Inneren der Rotorblätter verläuft in Längsrichtung des Rotorblattes mindestens ein Hauptsteg. Der mindestens eine Hauptsteg weist jeweils einen saugseitigen und einen druckseitigen Hauptstegfuß auf. Die Stegfüße bilden die Verklebestreifen aus.

Der mindestens eine Hauptsteg wird mit seinen Stegfüßen zunächst an der Innenseite der saugseitigen Rotorblatthalbschale verklebt, dann wird die druckseitige Rotorblatthalbschale über die saugseitige Rotorblatthalbschale mit den beiden eingeklebten Stegen geklappt, und die druckseitigen Hauptstegfüße werden mit der Innenseite der druckseitigen Rotorblatthalbschale verklebt. Zusätzlich weist die saugseitige oder druckseitige Rotorblatthalbschale entlang der Vorderkante einen Verklebestreifen auf, der nach dem Zusammenklappen an die Innenseite der vorderen Kante der jeweils anderen Rotorblatthalbschale geklebt wird.

Derartige Verklebungen sind beispielsweise in der DE 10 2016 011450 A1 beschrieben.

Nachteilig an den bekannten Rotorblättern ist die Tatsache, dass die Verklebestreifen üblicherweise über ihre gesamte Längsausdehnung zumindest über längere Abschnitte eine konstante Breite aufweisen. Möglicherweise kann die Breite in verschiedenen Abschnitten unterschiedlich sein, jedoch ist sie in jedem der Abschnitte wiederum konstant. Die erforderliche Minimalbreite der Verklebestreifen ist in jedem der Abschnitte durch die Kräfte bestimmt, die in Betrieb auf die spezielle Klebestelle wirken. Die Kräfte sind entlang der Länge der Längsabschnitte verschieden. Herkömmlicherweise wird die Breite des Klebestreifens in einem Längsabschnitt nach der maximalen Minimalbreite in diesem Längsabschnitt bestimmt und für die gesamte Länge des Längsabschnitts gewählt. Der Klebestreifen ist daher in der Regel deutlich überdimensioniert.

Es ist in einem ersten Aspekt Aufgabe der vorliegenden Erfindung, ein Rotorblatt zur Verfügung zu stellen, das mit geringeren Verklebeflächen auskommt.

Es ist in einem zweiten Aspekt Aufgabe der vorliegenden Erfindung, ein Verfahren zur Herstellung eines Rotorblattes zur Verfügung zu stellen.

Die Aufgabe wird durch ein eingangs genanntes Rotorblatt mit den Merkmalen des Anspruchs 1 gelöst.

Das erfindungsgemäße Rotorblatt weist mindestens eine Verklebung zwischen zwei Bauteilen auf, nämlich einer der Blattschalen und einem Steg. Es können aber auch andere Bauteile zum Verkleben vorgesehen sein. Die Verklebung ist streifenförmige ausgeformt. Sie wird auch als Verklebestreifen bezeichnet.

Die Idee der Erfindung beruht darauf, von der Vorstellung abzuweichen, dass die Verklebestreifen eine über ihre gesamte Längsausdehnung oder zumindest abschnittsweise rechteckige Form aufweisen müssen. Erfindungsgemäß verändert sich die Breite des Verklebestreifens entlang des wenigstens einen Längsabschnitts. Sie verändert sich innerhalb des wenigstens einen Abschnitts an jeder Stelle. Es gibt keinen Unterabschnitt des wenigstens einen Abschnitts, in dem keine Veränderung vorliegt, also die Steigung des Randes gegenüber dem Steg null ist.

Erfindungsgemäß ist vorgesehen, dass sich die Veränderung der Breite nicht nur auf Übergangsabschnitte zwischen rechteckigen Verklebestreifen erstreckt, sondern wesentliche Bereiche des Verklebestreifens bestimmt. Daher erstreckt sich der wenigstens eine Längsabschnitt mit der veränderlichen Verklebestreifenbreite über wenigstens 10%, vorzugsweise 20 %, besonders bevorzugt wenigstens 30 % der Länge des Verklebestreifens.

Der wenigstens eine Verklebestreifen kann eine Vielzahl an Längsabschnitten aufweisen, die jeweils sich verändernde Verklebebreiten aufweisen. Die sich verändernde Verklebebreite des Klebestreifens verläuft dabei vorzugsweise gleichbleibend linear entlang des wenigstens einen Längsabschnitts. Eine lineare Veränderung der Breite der Verklebestreifen kann manuell beim Einlegen der Verklebestreifen in die Rotorblatthalbschalen hergestellt werden, indem herkömmliche rechteckige Verklebestreifen mit einer Schere linear schräg abgeschnitten werden. Lineare Steigungen sind relativ leicht herstellbar.

Die Steigungen der Verklebestreifen, d. h. die sich verändernde Breite des Verklebestreifens kann innerhalb der verschiedenen Abschnitte unterschiedlich sein oder auch gleich sein. Günstigerweise ist die Summe der Längsabschnitte mit sich verändernder Steigung wenigstens 20 %, vorzugsweise wenigstens 30 %, vorzugsweise wenigstens 60 % der Gesamtlänge des Verklebestreifens.

Die Veränderung der Breite der Verklebestreifen kann in verschiedenen Längsabschnitten in verschiedenen Steigungen erfolgen. Die Steigung wird abschnittsweise einer vorab berechneten oder empirisch ermittelten Verklebebreite angepasst.

Die Verklebebreite der Hauptstege im Bereich der Rotorblattwurzel kann gering sein. Rotorblätter verfügen über wenigstens einen Steg, vorzugsweise zwei Stege, insbesondere Hauptstege, die in Längsrichtung des Rotorblattes im Inneren des Rotorblattes verlaufen. Sie weisen jeweils einen saugseitigen Stegfuß auf, der an einer saugseitigen Rotorblatthalbschale verklebt ist, und einen druckseitigen Stegfuß, der an einer druckseitigen Rotorblatthalbschale verklebt ist. Die Stegfüße sind jeweils an der Innenseite der jeweiligen Rotorblatthalbschale verklebt. Die Auflagefläche des Stegfußes ist der Verklebestreifen.

Die Breite der Stegfüße nimmt in dem wenigstens einen, vorzugsweise in verschiedenen Längsabschnitten jeweils kontinuierlich ab oder zu. Dadurch kann vorteilhafterweise die Verklebefläche insgesamt verkleinert werden, und somit können Material und Klebstoff eingespart werden.

In einer anderen Ausführungsform kann der Verklebestreifen als Verklebelippe am nasenseitigen Rand einer der Rotorblatthalbschalen, vorzugsweise der saugseitigen Rotorblatthalbschale, angeordnet sein. Die Verklebelippe wird nach dem Zusammenklappen der beiden Rotorblatthalbschalen auf die Innenseite der gegenüberliegenden Rotorblatthalbschale, vorzugsweise der druckseitigen Rotorblatthalbschale, geklebt.

Auch die Verklebelippe an der Vorderkante der Rotorblattschale kann über ihre Länge in Längsrichtung verschiedene Breiten aufweisen, wobei die Breite der Verklebelippe ebenfalls abschnittsweise linear ab- oder zunimmt.

Erfindungsgemäß werden die Verklebestreifen des Stegs als L-förmiger Stegfuß ausgebildet sein. Die Breite des Verklebestreifens bestimmt sich dabei als Breite über die gesamte Breite des jeweiligen Stegfußes.

Die Aufgabe wird in ihrem zweiten Aspekt durch ein eingangs genanntes Verfahren mit den Merkmalen des Anspruchs 8 gelöst.

Erfindungsgemäß wird ein Rotorblatt hergestellt, indem zwei Bauteile in einem Verklebestreifen miteinander verklebt werden. Eine Verklebefläche zwischen den beiden Bauteilen wird streifenförmig ausgebildet. Das Verfahren einigte sich zur Herstellung eines der oben genannten Rotorblatter umgekehrt können die oben genannten Rotorblatter durch eines der bachfolgenden Verfahren hergestellt werden.

Erfindungsgemäß wird der Verklebestreifen in Längsabschnitte eingeteilt, so dass vorzugsweise die gesamte Längsausdehnung des Verklebestreifens in Längsabschnitte aufgeteilt ist. Es werden minimale Verklebebreiten an jedem Punkt entlang wenigstens eines Längsabschnittes ermittelt. Dabei werden vorzugsweise die Verklebebreiten für einzelne voneinander beabstandete Punkte berechnet und eine Kurve durch die berechneten Verklebebreiten interpoliert. Die minimalen Verklebebreiten können sich rechnerisch oder empirisch ergeben. Die Verklebebreiten sind entlang des wenigstens einen Längsabschnitts eines Verklebestreifens üblicherweise höchst unterschiedlich und variieren.

Es wird dann ein Verklebestreifen hergestellt, der für jeden Punkt des wenigstens einen Längsabschnitts eine über eine Länge des Längsabschnitts veränderliche Breite aufweist, die an jedem Punkt größer als die minimale Verklebebreite ist.

Der erfindungsgemäße Verklebestreifen ist nicht durch einen vollständig oder über die überwiegende Längsausdehnung rechteckigen Streifen realisiert, sondern durch einen Verklebestreifen mit abgeschrägten Seitenrändern, wobei die Schrägung so gewählt ist, dass sie der ermittelten Veränderung der minimalen Verklebebreiten angepasst ist.

Die Anpassung kann dabei abschnittsweise erfolgen, sodass die Veränderung der Breite der Verklebestreifen abschnittsweise konstant linear ausgebildet ist. In den einzelnen Abschnitten sind die Steigungen der Verklebestreifen jedoch unterschiedlich. Unter Steigung des Verklebestreifens ist hier die Steigung des Randes des Verklebestreifens gegenüber einer 0-Linie zu verstehen wie beispielsweise gegenüber einem Rotorblatthalbschalenrand bei der Verklebelippe oder gegenüber dem Steg bei dem Stegfuß oder Ähnliches. Das entspricht, die Steigung als Änderung der Verklebebreite in einem Längsabschnitt zu definieren, wobei die Verklebebreite als Breite zwischen dem Rand und der Nulllinie verstanden wird. Vorzugsweise verändert sich die realisierte Breite entlang jedes Längsabschnittes gleichbleibend linear. Derartige lineare Veränderungen der Verklebebreite können vom Arbeiter manuell auch im Nachhinein leicht durch Abschneiden des Laminates des Verklebestreifens hergestellt werden.

Die Erfindung wird anhand eines Ausführungsbeispiels in zwei Figuren beschrieben, dabei zeigen
- Fig. 1: eine perspektivische Ansicht eines Stegs eines Rotorblattes,
- Fig. 2: eine graphische Darstellung berechneter Verklebungsbreiten bezüglich der Abhängigkeit von dem Abstand zu einer Rotorblattwurzel.

Herkömmliche Rotorblätter sind üblicherweise aus zwei Rotorblatthalbschalen aufgebaut, die an ihrer Vorderkante zu einer Nase und an der Hinterkante miteinander verklebt sind. Entlang der Vorderkante einer der Rotorblatthalbschalen, üblicherweise der saugseitigen Rotorblatthalbschale, ist ein Verklebestreifen vorgesehen, der von der saugseitigen Rotorblatthalbschale innen absteht und ein Verkleben mit der druckseitigen Rotorblatthalbschale mit dem Verklebestreifen auf die Innenseite der druckseitigen Rotorblatthalbschale ermöglicht. Der Verklebestreifen weist eine Breite auf, die sich von der Kante der saugseitigen Rotorblatthalbschale bis zu einem freien Verklebestreifenrand erstreckt. Die Breite ist veränderlich. Sie nimmt abschnittsweise linear zu oder ab.

In Längsrichtung verlaufen ein, vorzugsweise zwei Stege. Die Erfindung wird anhand eines Steges 1 beschrieben. Der Steg 1 verläuft in einer Längsrichtung L des Rotorblattes und ist in seiner Höhe H der Höhe des Innenraumes des Rotorblattes, also dem Abstand zwischen den Innenseiten der beiden Rotorblattschalen, die verbunden werden sollen, genau angepasst. Herkömmlicherweise ist der Steg 1 in einem Abschnitt, der einer Rotorblattwurzel benachbart ist, mit zwei T-Füßen ausgebildet. In einem sich zur Rotorblattspitze anschließenden Abschnitt ist der Steg 1 mit zwei L-Füßen ausgebildet. Die beiden T-Füße bzw. die beiden L-Füße werden hier auch als Verklebestreifen 2, 3 bezeichnet, und sie haben auch die Funktion eines Verklebestreifens 2, 3. Ein saugseitiger Verklebestreifen 2 wird auf eine Innenseite der saugseitigen Rotorblatthalbschale geklebt. Dann werden die beiden Rotorblatthalbschalen aufeinandergeklappt, und ein druckseitiger Verklebestreifen 3 wird auf eine Innenseite der druckseitigen Rotorblatthalbschale geklebt.

Die Herstellungsform ist entsprechend klappbar. Eine saugseitige Herstellungshalbform verbleibt während des Herstellungsverfahrens am Boden, und eine druckseitige Herstellungshalbform ist z. B. mittels Scharnieren relativ beweglich zur saugseitigen Herstellungshalbform und wird auf die saugseitige Herstellungshalbform geklappt. Gleichzeitig wird der Verklebestreifen an der Rotorblattnase verklebt.

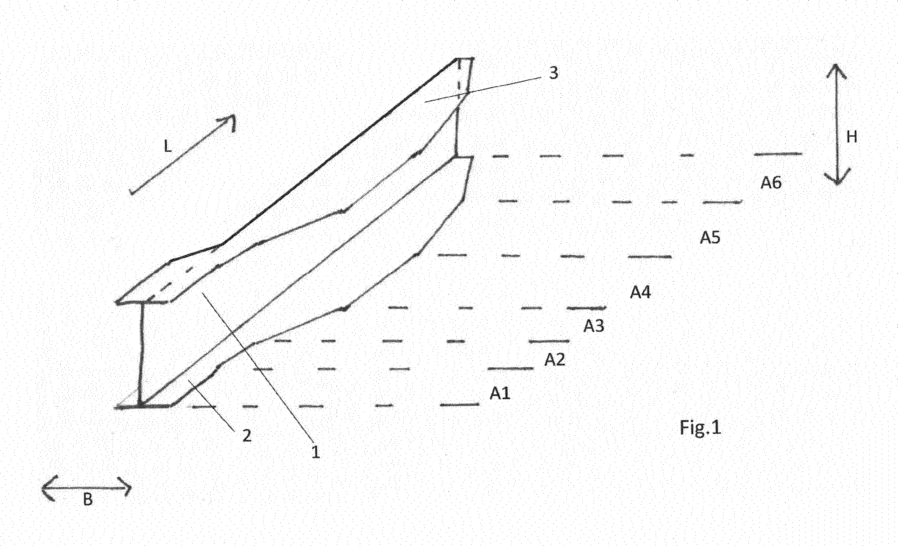

In Fig. 1 ist der Steg 1 für ein Rotorblatt dargestellt. Der Steg 1 weist sechs Längsabschnitte A1, A2, A3, A4, A5 und A6 auf. Der Steg 1 weist an seinem in Fig.1 vorderen rotorblattwurzelseitigen Ende den ersten Längsabschnitt A1 auf. In dem ersten Längsabschnitt ist eine Breite des saugseitigen und des druckseitigen Verklebestreifens 2, 3 jeweils konstant über die gesamte Länge des ersten Abschnitts A1.

Es ist denkbar, dass die Steigungen in Längsrichtung L links und rechts in einem oder mehreren Längsabschnitten A1, A2, A3, A4, A5, A6 verschieden verlaufen. Hier verlaufen die Steigungen im Abschnitt A1 symmetrisch und in den anderen Abschnitten asymmetrisch. In den Abschnitten A1 und A2 liegt ein T-förmiger Stegfuß und in den Abschnitten A3, A4, A5 und A6 ein L-förmiger Stegfuß vor.

Eine Verklebefläche des zweiten, sich direkt an den ersten anschließenden Längsabschnitt A2 ist an ihrem rotorblattwurzelseitigen Ende am schmalsten, und eine Breite B der saug- und druckseitigen Verklebestreifen 2, 3 nimmt in Längsrichtung L zur Rotorblattspitze hin linear zu. Die Verklebestreifen 2, 3 werden also, wie Fig. 1 zeigt, im zweiten Längsabschnitt A2 kontinuierlich in Längsrichtung L breiter, wobei die Zunahme der Breite B durch die Steigung des Randes des Verklebestreifens 2, 3 gegenüber dem Steg 1 auf einer Seite des Steges 1 bestimmt ist. Die Steigung des anderen Randes des Verklebestreifens 2, 3 verläuft linear zum Steg 1.

In dem sich an den zweiten Längsabschnitt A 2 direkt anschließenden dritten Längsabschnitt A3 nimmt die Breite B beider Verklebestreifen 2, 3 ebenfalls linear zu, sie nimmt jedoch stärker zu als entlang des zweiten Längsabschnitts A2. Die Steigung des einen Randes des Verklebestreifens 2, 3 gegenüber dem Steg 1 ist größer als im zweiten Längsabschnitt A2. In dem vierten Längsabschnitt A4 ist die Breite B des Verklebestreifens 2, 3 konstant. In diesem Längsabschnitt A4 entspricht die Ausbildung des Verklebestreifens 2, 3 der Ausbildung herkömmlicher Verklebestreifen. Der andere Rand des Verklebestreifens 2, 3 läuft entlang dem Steg 1 und weist keine Steigung auf.

In einem sich dem vierten Längsabschnitt A4 direkt anschließenden fünften Längsabschnitt A5 nimmt die Breite B der Verklebestreifen 2, 3 kontinuierlich linear ab. Die Abnahme entspricht in etwa der Zunahme der Breite B der Verklebestreifen 2, 3 im dritten Längsabschnitt A3. In dem äußersten der Rotorblattspitze benachbarten Verklebestreifen 2, 3, im sechsten Längsabschnitt A6 nimmt die Breite B stärker ab als im fünften Längsabschnitt A5.

Der in Fig. 1 dargestellte untere saugseitige Verklebestreifen 2 und der in Fig. 1 dargestellte obere druckseitige Verklebestreifen 3 sind in jedem Querschnitt gleich breit ausgebildet. Es ist jedoch denkbar und auch vorgesehen, dass die Breite B der Verklebestreifen 2, 3 in einem Querschnitt senkrecht zur Längsrichtung L des Steges 1 druckseitig und saugseitig verschieden voneinander sein kann.

Insbesondere kann die Breite B des saugseitigen Verklebestreifens 2 über einen ganzen Längsabschnitt A1, A2, A3, A4, A5, A6 oder sogar über jeden der Längsabschnitte A1, A2, A3, A4, A5, A6 in jedem Querschnitt anders sein als die Breite B des druckseitigen Verklebestreifens 3.

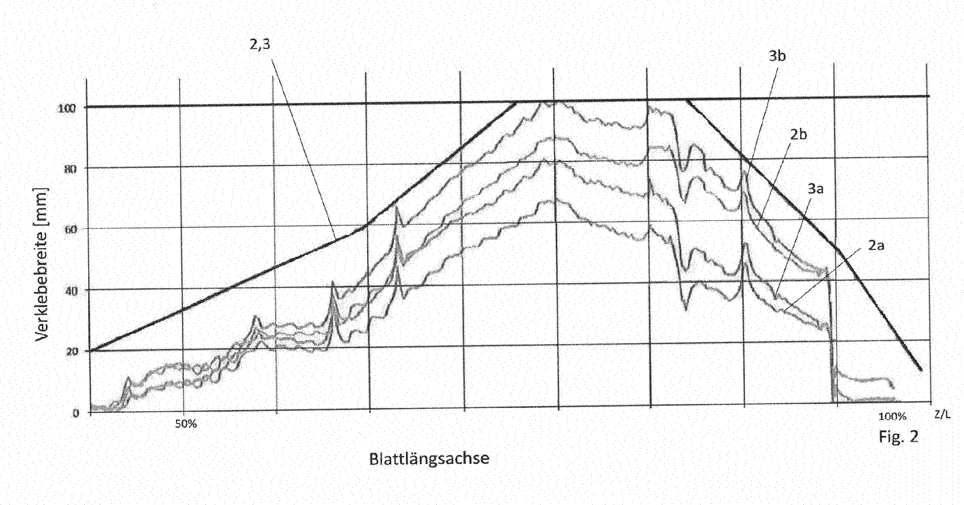

Fig. 2 zeigt in einer Grafik berechnete Verklebebreiten der Verklebestreifen 2, 3 für ein beispielhaft realisiertes Rotorblatt. Die Breite der Verklebestreifen 2, 3 entspricht dabei der Verklebebreite. Das Rotorblatt weist einen der Hinterkante (trailing edge) benachbarten hinteren Steg 1a und einen der Vorderkante (leading edge) benachbarten vorderen Steg 1b auf. Sowohl der hintere als auch der vordere Steg 1a, 1b weisen jeweils den druckseitigen Verklebestreifen 3 und den saugseitigen Verklebestreifen 2 auf. Auf der x-Achse ist eine relative Länge des Rotorblattes bzw. Steges aufgetragen.

In der Fig. 2 sind in den vier berechneten Graphen von oben nach unten ein hinterer druckseitiger Verklebestreifen 3b, ein hinterer saugseitiger Verklebestreifen 2b, ein vorderer druckseitiger Verklebestreifen 3a und ein vorderer saugseitiger Verklebestreifen 3b dargestellt. Die Verklebebreite ist in Abhängigkeit von der Entfernung von der Rotorblattwurzel entlang der Längsrichtung L dargestellt. Im Hinblick auf den Steg 1 in Fig. 1 sind die Längsabschnitte A2 bis A6 dargestellt.

Gemäß dem Stand der Technik ist die Breite B der zwei Verklebestreifen 2a, 3a des vorderen Steges 1a über ihre gesamte Längsrichtung L gleich, und die Breite B der Verklebestreifen 2b, 3b des hinteren Steges 1b ist ebenfalls über ihre gesamte Längsrichtung L gleich. Darüber hinaus sind die Breiten B zwischen dem vorderen und dem hinteren Steg 1a, 1b ebenfalls gleich. Die Breite B der herkömmlichen Verklebestreifen 2, 3 ist als horizontale Linie dargestellt. Die Breite B bestimmt sich nach der größten berechneten Verklebebreite.

Erfindungsgemäß sind die Breiten B der Verklebestreifen 2, 3 gemäß Fig. 1 im zweiten Abschnitt A2, im dritten Abschnitt A3 sowie im fünften Abschnitt A5 und im sechsten Abschnitt A6 jeweils gleichbleibend linear verbreitert bzw. verschmälert, wobei die Zu- bzw. Abnahme innerhalb jedes Abschnitts A2, A3, A5, A6 gleich ist, jedoch zwischen den Abschnitten A2, A3, A5, A6 verschiedene Ab- und Zunahmen erfolgen. Die Breite B der Verklebestreifen 2, 3 ist als durchgezogene, gewinkelte Linie dargestellt.

Der erste Abschnitt A1 ist in der Grafik gemäß Fig. 2 nicht dargestellt. Direkt neben der Rotorblattwurzel sind auf die Stege 1a, 1b wirkende Kräfte gering, und es braucht nur ein sehr schmaler Verklebestreifen 2, 3 gewählt zu werden. Die höheren Lasten beginnen erst in einem aerodynamisch ausgeformten Abschnitt des Rotorblattes, insbesondere im Bereich zwischen ca. 70 % und ca. 80 % der Rotorblattlänge. Dort sind die Verklebestreifen 2, 3 mit einer Breite von 100 mm auch am breitesten.

Fig. 2 zeigt, dass die Verklebestreifenbreiten abschnittsweise den berechneten Verklebebreiten angepasst sind. Grundsätzlich sind natürlich auch andere Unterteilungen der Längsabschnitte A1, A2, A3, A4, A5, A6 denkbar. Im vorliegenden Fall wurde der Steg 1 in sechs Abschnitte A1, A2, A3, A4, A5, A6 unterteilt. Es können auch mehr oder weniger Abschnittsunterteilungen erfolgen, insbesondere können die Breiten der vier Verklebestreifen 2a, 2b, 3a, 3b jedoch für jeden der beiden Stege 1a, 1b individuell bestimmt werden, so dass es grundsätzlich auch denkbar ist, dass die Breiten B der vorderen Verklebestreifen 2a, 3a des vorderen Steges 1a in jedem Querschnitt senkrecht zur Längsrichtung L schmaler sind als die Breiten B der hinteren Verklebestreifen 2b, 3b des hinteren Steges 1b, weil die berechneten Kurven der Verklebebreiten in jedem Querschnitt für den hinteren Stege 1b größer sind als die Verklebebreiten des vorderen Steges 1a.

In dem in Fig. 2 dargestellten Beispiel ist die Gesamtfläche der erfindungsgemäßen Verklebestreifen 2, 3 aufgrund der abschnittsweisen linearen Veränderung der Verklebestreifenbreiten insgesamt geringer als die Fläche der Verklebestreifen 2, 3 bei einem gleichbleibend, über die gesamte Längsausrichtung L gleichbreiten Verklebestreifen 2, 3. Die Flächenersparnis beträgt etwa 44 %, so dass eine Materialersparnis und auch eine Klebstoffersparnis in beträchtlichem Ausmaße erzielbar sind, die zu keiner Verschlechterung der Stabilität des Rotorblattes führen.

### Bezugszeichenliste

- 1: Steg
- 1a: vorderer Steg
- 1b: hinterer Steg

- 2: saugseitiger Verklebestreifen
- 2a: vorderer saugseitiger Verklebestreifen
- 2b: hinterer saugseitiger Verklebestreifen

- 3: druckseitiger Verklebestreifen
- 3a: vorderer druckseitiger Verklebestreifen
- 3b: hinterer druckseitiger Verklebestreifen

- A1: Längsabschnitt
- A2: Längsabschnitt
- A3: Längsabschnitt
- A4: Längsabschnitt
- A5: Längsabschnitt
- A6: Längsabschnitt

- B: Breite

- H: Höhe

- L: Längsrichtung

## Patentansprüche

1. Rotorblatt mit mindestens einer Verklebung zwischen zwei Bauteilen in Form eines Verklebestreifens (2, 3) mit einer Länge und einer Breite (B), der wenigstens einen Längsabschnitt (A1, A2, A3, A4, A5, A6) aufweist,
**dadurch gekennzeichnet, dass** das eine Bauteil als Steg (1) ausgebildet ist und der Verklebestreifen L-förmig an einem Stegfuß angeordnet ist und sich die Breite (B) des Verklebestreifens (2, 3) entlang des wenigstens einen Längsabschnitts (A1, A2, A3, A4, A5, A6) verändert.

2. Rotorblatt nach Anspruch 1,
**dadurch gekennzeichnet, dass** sich die Breite (B) des Verklebestreifens (2, 3) gleichbleibend linear entlang des wenigstens einen Längsabschnitts (A1, A2, A3, A4, A5, A6) verändert.

3. Rotorblatt nach Anspruch 1 oder 2,
**dadurch gekennzeichnet, dass** sich die Breite (B) des Verklebestreifens (2, 3) in den verschiedenen Längsabschnitten (A1, A2, A3, A4, A5, A6) in verschiedenen Steigungen zu einer entlang der Länge verlaufenden Längsrichtung (L) verändert.

4. Rotorblatt nach Anspruch 1, 2 oder 3,
**dadurch gekennzeichnet, dass** sich der wenigstens eine Längsabschnitt (A1, A2, A3, A4, A5, A6) über wenigstens 10 %, vorzugsweise 20 %, besonders bevorzugt wenigstens 30 % der Länge des Verklebestreifens (2, 3) erstreckt.

5. Rotorblatt nach Anspruch 1,
**dadurch gekennzeichnet, dass** der Steg (1) an sich gegenüberliegenden Steglängskanten jeweils einen der Verklebestreifen (2, 3) aufweist, die entlang eines Stegquerschnittes unterschiedliche Breiten (B) aufweisen.

6. Rotorblatt nach einem der vorstehenden Ansprüche,
**dadurch gekennzeichnet, dass** der Stegfuß L-förmig ausgebildet ist.

7. Rotorblatt nach einem der Ansprüche 1 - 4, **dadurch gekennzeichnet, dass** der Verklebestreifen (2, 3) entlang einer Vorderkante des Rotorblattes angeordnet ist und beide Rotorblatthalbschalen miteinander verbindet.

8. Verfahren zur Herstellung eines Rotorblattes, indem
ein Steg (1) mit einem L-förmig an einem Stegfuß angeordneten Verklebestreifen (2, 3) mit einer Rotorblatthalbschale verklebt wird,
der Verklebestreifen (2, 3) in Längsabschnitte (A1, A2, A3, A4, A5, A6) eingeteilt wird, minimale Verklebebreiten an jedem Punkt entlang wenigstens einer der Längsabschnitte (A1, A2, A3, A4, A5, A6) ermittelt werden,
für jeden Punkt des wenigstens einen Längsabschnitts (A1, A2, A3, A4, A5, A6) eine über eine Länge des wenigstens einen Längsabschnitts (A1, A2, A3, A4, A5, A6) veränderliche Breite (B) des Verklebestreifens (2, 3) realisiert wird, die an jedem Punkt größer als die ermittelte Verklebebreite ist.

9. Verfahren nach Anspruch 8,
**dadurch gekennzeichnet, dass** sich die veränderliche Breite (B) entlang jedes Längsabschnitts (A1, A2, A3, A4, A5, A6) gleichbleibend linear verändert.

10. Verfahren nach Anspruch 8 oder 9,
**dadurch gekennzeichnet, dass** die Verklebestreifen (2, 3) entlang einer Vorderkante des Rotorblattes angeordnet werden und beide Rotorblatthalbschalen miteinander verbinden.

## Claims

1. Rotor blade with at least one bond between two components in the form of a bonding strip (2, 3) with a length and a width (B), and the bonding strip (2, 3) having at least one longitudinal portion (A1, A2, A3, A4, A5, A6), **characterised in that** the one component is formed as a web (1) and the bonding strip is arranged in an L shape on a web foot, and the width (B) of the bonding strip (2, 3) changes along the at least one longitudinal portion (A1, A2, A3, A4, A5, A6).

2. Rotor blade according to claim 1, **characterised in that** the width (B) of the bonding strip (2, 3) changes consistently in a linear manner along the at least one longitudinal portion (A1, A2, A3, A4, A5, A6).

3. Rotor blade according to claim 1 or 2, **characterised in that** the width (B) of the bonding strip (2, 3) changes in the longitudinal portions (A1, A2, A3, A4, A5, A6) at different gradients to a longitudinal direction (L) running along the length.

4. Rotor blade according to claim 1, 2 or 3, **characterised in that** the at least one longitudinal portion (A1, A2, A3, A4, A5, A6) extends over at least 10%, preferably 20%, particularly preferably at least 30% of the length of the bonding strip (2, 3).

5. Rotor blade according to claim 1, **characterised in that** the web (1) has on opposing longitudinal web edges in each case one of the bonding strips (2, 3) which have different widths (B) along a web cross-section.

6. Rotor blade according to any one of the preceding claims, **characterised in that** the web foot is L-shaped.

7. Rotor blade according to any one of claims 1-4, **characterised in that** the bonding strip (2, 3) is arranged along a leading edge of the rotor blade and connects both rotor blade half-shells to one another.

8. Method for producing a rotor blade, a web with a bonding strip (2, 3) which is arranged L-shaped at a web foot being bonded with a rotor blade half shell, the bonding strip (2, 3) being divided into longitudinal portions (A1, A2, A3, A4, A5, A6), minimum bonding widths being determined at each point along at least one of the longitudinal portions (A1, A2, A3, A4, A5, A6), and for each point of the at least one longitudinal portion (A1, A2, A3, A4, A5, A6) a changeable width (B) of the bonding strip (2, 3) being realised over a length of the at least one longitudinal portion (A1, A2, A3, A4, A5, A6) which is at each point greater than the determined bonding width.

9. Method according to claim 8, **characterised in that** the changeable width (B) changes consistently in a linear manner along each longitudinal portion (A1, A2, A3, A4, A5, A6).

10. Method according to claim 8 or 9, **characterised in that** the bonding strips (2, 3) are arranged along a leading edge of the rotor blade and connect both rotor blade half-shells to one another.

## Revendications

1. Pale de rotor avec au moins un collage entre deux composants sous forme d'une bande adhésive (2, 3) avec une longueur et une largeur (B) qui présente au moins une portion longitudinale (A1, A2, A3, A4, A5, A6),
**caractérisée en ce que** l'un des composants est configuré comme une barrette et la bande adhésive est placée en forme de L à une base de barrette et que la largeur (B) de la bande adhésive (2, 3) varie le long de la au moins une portion longitudinale (A1, A2, A3, A4, A5, A6).

2. Pale de rotor selon la revendication 1, **caractérisée en ce que** la largeur (B) de la bande adhésive (2, 3) varie de manière constante de manière linéaire le long de la au moins une portion longitudinale (A1, A2, A3, A4, A5, A6).

3. Pale de rotor selon la revendication 1 ou 2, **caractérisée en ce que** la largeur (B) de la bande adhésive (2, 3) varie dans les différentes portions longitudinales (A1, A2, A3, A4, A5, A6) dans différentes inclinaisons vers une direction longitudinale (L) qui est le long de la longueur.

4. Pale de rotor selon la revendication 1, 2 ou 3, **caractérisée en ce que** la au moins une portion longitudinale (A1, A2, A3, A4, A5, A6) s'étend sur au moins 10%, de préférence sur 20%, de manière particulièrement préférée sur au moins 30% de la longueur de la bande adhésive (2, 3).

5. Pale de rotor selon la revendication 1, **caractérisée en ce que** la barrette (1) présente, sur des bords longitudinaux de barrette opposés, respectivement une des bandes adhésives (2, 3) qui présentent différentes largeurs (B) le long d'une section transversale de barrette.

6. Pale de rotor selon l'une des revendications précédentes, **caractérisée en ce que** la base de barrette est configurée en forme de L.

7. Pale de rotor selon l'une des revendications 1 à 4, **caractérisée en ce que** la bande adhésive (2, 3) est placée le long d'un bord antérieur de la pale de rotor et qu'elle relie les deux demi-coques de pale de rotor l'une à l'autre.

8. Procédé pour la fabrication d'une pale de rotor, une barrette avec une bande adhésive (2, 3) placée en forme de L à une base de barrette étant collée à une demi-coque de pale de rotor,
la bande adhésive (2, 3) étant répartie dans des portions longitudinales (A1, A2, A3, A4, A5, A6), des largeurs de collage minimales étant déterminées à chaque point le long d'au moins une des portions longitudinales (A1, A2, A3, A4, A5, A6), une largeur variable (B) de la bande adhésive (2, 3) étant réalisée pour chaque point de la au moins une portion longitudinale (A1, A2, A3, A4, A5, A6) sur une longueur de la au moins une portion longitudinale (A1, A2, A3, A4, A5, A6) qui est supérieure à chaque point à la largeur de collage déterminée.

9. Procédé selon la revendication 8, **caractérisé en ce que** la largeur variable (B) varie de manière constante de manière linéaire le long de chaque portion longitudinale (A1, A2, A3, A4, A5, A6).

10. Procédé selon la revendication 8 ou 9, **caractérisé en ce que** les bandes adhésives (2, 3) sont placées le long d'un bord antérieur de la pale de rotor et relie les deux demi-coques de pale de rotor l'une à l'autre.
